# EUROPEAN PATENT APPLICATION

(11) **EP 2 738 060 A1**
(43) Date of publication of application: **04.06.2014**
(21) Application number: 12194849.1
(22) Date of filing: 29.11.2012
(51) Int. Cl.: B61D 41/04, B60N 2/00, G08G 1/005

(54) **Passenger guidance system for guidance of passengers within a public transportation vehicle**

(71) Applicant: Bombardier Transportation GmbH, 10785 Berlin (DE)
(72) Inventor: Griggs, Paul, Ambergate Derbyshire DE56 2JL (GB); Luchterhand, Markus, 17217 Penzlin (DE)
(74) Representative: Beyer, Andreas

(57) **Abstract**

Passenger guidance system for guidance of passengers within a public transportation vehicle (50), comprising
- one or more visible signal indicators (3, 4; 8-17), placed in the interior of the vehicle (50) and adapted to guide passengers to free seats and/or free standing areas within the vehicle,
- a detecting means (60, 65) adapted to detect free seats (63, 66) and/or free standing areas,
- a control unit (61) adapted to control the visible signal indicators,
- a data transmission means (62) adapted to transmit data from the control unit (61) to the visible signal indicators (3),
wherein the control unit (61) is adapted to act on the visible signal indicators (3, 4; 8-17) in such a way that a signal is shown that guides passengers to free seats (63, 66) and/or free standing areas.

## Description

### FIELD OF THE INVENTION

The present invention relates to a passenger guidance system for guidance of passengers within a public transportation vehicle, to a railway vehicle comprising such guidance system, and to a process for guidance of passengers within a public transportation vehicle.

### BACKGROUND OF THE INVENTION

Public transportation vehicles, as for example subways and streetcars, are usually confronted with a traffic congestion problem during rush hours. This congestion is mainly caused by over-loading of passengers into the vehicles which exceeds the limits of transportation capacity of the system. Train travel time delays and overcrowding of train compartments during rush hours are a direct result of this over-loading. Several solutions were proposed in the prior art to solve this problem. Following solutions suggest track side regulation of passenger flow, using platform gates or platform indicators:
WO 98/24072 relates to a device for guiding flows of individuals in mass transportation systems, containing at least the following components: A) a guidance system in embarking and disembarking areas interacting with at least one of the following devices: a) a guidance system in the means of transportation, b) a blocking device between the embarking/disembarking areas and the means of transportation.

In US 5,176,082 a passenger detection loading and unloading control system is provided for high volume passenger transporters such as subway trains and the like which electronically counts the passengers in each passenger compartment and prepositions passengers that intend to deboard at the next passenger loading and unloading platform and which electronically counts and prepositions a number of passengers at the next platform for boarding. The system further permits simultaneous loading and unloading of passengers without interference with passenger flow. Passengers on the transporter are numerically counted and those passengers intended to deboard the transporter at the next platform are also counted. Signals representing these counted passengers are continuously transmitted to a signal processing facility for processing. A predetermined time schedule for arrival and departure is established for the high volume passenger transporter in relation to each passenger loading and unloading platform. The processed passenger information from the transporter is communicated to the platform and utilized for controlling maximum loading of the transporter in compliance with the predetermined time schedule so that the transporter system functions in its most efficient passenger handling manner and keeps all transporters operating on the pre-established time schedule.

The system of DE 10 2007 046 285 A1 has a calculation device for calculating a passenger density of a transport unit, and assigning values of the calculated passenger density to doors. A regulating and controlling device regulates display units. A data transmission device transmits data between the regulating and controlling device and the display units. The regulating and controlling device is equipped so that a signal is provided for display in the display units based on the values of the calculated passenger density, where the values are associated to the doors. An independent claim is also included for a method for guiding passengers during boarding in a transport in a passenger control system.

A drawback of the systems referenced above is the effort in providing stations and platforms with necessary means for the passenger control. One task of the present invention was to provide with an improved passenger guidance system. The system should be easy to realize and to install. Moreover, the system should be able to minimize uneven crowded cars within one train set.

The invention provides with a passenger guidance system according to claim 1. Advantageous embodiments are subject of dependent claims on the system.

### GENERAL DESCRIPTION OF THE INVENTION

The invention provides with a passenger guidance system for guidance of passengers within a public transportation vehicle, comprising
- one or more visible signal indicators, placed in the interior of the vehicle and adapted to guide passengers to free seats and/or free standing areas within the vehicle,
- a detecting means adapted to detect free seats and/or free standing areas,
- a control unit adapted to control the visible signal indicators,
- a data transmission means adapted to transmit data from the control unit to the visible signal indicators,
wherein the control unit is adapted to act on the visible signal indicators in such a way that a signal is shown that guides passengers to free seats and/or free standing areas.

The basic idea of the invention is to to control and influence passenger flow in the interior of a vehicle in oder to reach a more even distribution of passengers within the vehicle. For example, a more even spread of passengers across the train can be reached. The invention is applicable to all passenger railway vehicles and buses, especially mass transit where minimised boarding times are crucial. Examples for railway vehicles are long distance trains, suburban trains, subway trains, streetcars. In railway vehicles boarding passengers can be drawn away from overcrowded vestibules to other areas because the guidance system of the invention guides passengers to free seats or standing places. The expression "to guide passengers to free seats or free standing places" may mean that passengers are guided to regions within the train where free seats or standing places may be found or that passengers are directly guided to free seats or free standing places.

Detecting means that detect free seats and /or free standing places may be, for example, means for detection of the load condition of seats or of a floor. Such means are preferably located within the seat, below the surface of the seat or below the surface of a floor. Load condition may be monitored by pressure detecting sensors that detect pressure caused by a human body. For example, pressure from air springs may be detected. Further examples are inductive sensors or capacitive sensors that detect presence of a human body.

Another means for detecting free seats and /or free standing places may be cameras, as for example CCD cameras (CCD = Charge coupled device). Pictures of the camera may be processed by known methods of image data processing. For example, a Closed-circuit television (CCTV) system with corresponding CCTV data processing may be employed.

Passenger counting on doors by known methods may be used as a further method to obtain information about a number of passengers that enter or leave the train. This information may be used to check the number of free seats and free standing places within the train since the total number of seats and standing places is known.

The one or more visible signal indicators may be adapted to indicate signals in written text, or other optical means. A preferred guidance system is an optical guidance system. Optical means preferred in accordance with the invention of this optical guidance system are illuminated areas, preferably in different colors and configurations. The one or more visible signal indicators are preferably in the form of a directional arrow and/or in the form of areas of different color, as for example colored lights. The visible signal indicators may be adapted to indicate signals in the form of illuminated areas, for example composed of a plurality of individual light dots, which may change their coloration and making up illuminated areas so that a variation of the light, luminosity and color of the individual light point may be produced as geometrical figures, as for example arrows and indicating signs, and furthermore signs and/or combinations thereof, preferably lettering and more particularly pictograms, which are suitable to provide the guidance system with information about a dedication for guidance of the individual streams.

In a preferred embodiment an optical guidance system may have areas changing in their coloration, preferably denoting another direction of movement. Particular examples are arrows. The optical guidance system may have light-pulsing areas.

In another preferred embodiment an optical guidance system may include changing forms, preferably denoting another direction of movement.

Preferred visible signal indicators may be, without restriction, LED lights, organic LED films or solid state films.

Further preferred optical guidance systems in accordance with the invention are those of a combination of illuminated, and preferably colored, areas and indicating arrows. The term "indicating arrows" is to mean not only indicating signs in the form of arrows but also all signs which are suitable for indicating the direction or generally for guidance of the individual stream. Instead of indicating arrows it is however possible also to provide other signs and/or combinations thereof.

In a preferred embodiment of the invention the one or more visible signal indicators are particularly in the form of illuminated differently colored areas changing their coloration with or without indicating arrows. Such guidance system gives passengers a better ride experience by using colours / light levels to influence their mood exiting the vehicle.

The one or more visible signal indicators may be, without restriction, located in the floor, in or above windows, in or above doors, or in the ceiling of the vehicle. The term "placed in the interior" preferably means that visible signal indicators are distributed over one or more regions within the vehicle. In a functional description, the term "placed in the interior" means that the visible signal indicators are adapted to guide passengers within the interior of the vehicle, for example to guide passengers from a first point to a second point within the vehicle, wherein the second point is remotely located from the first point and wherein the second point may be a free seat of standing place. A special example is guidance of a passenger on a way from a door or a vestibule to free seats or standing places that are remotely located from the door or vestibule.

In another embodiment, one or more visible signal indicators are placed in a transition section between two connected parts of the vehicle. The transition section may be a gangway between two modules of a subway or a streetcar, wherein the two modules are preferably connected by an articulated joint. Visible signal indicators may be located on the inner side of a gangway bellow. Signal indicators located in a transition section are preferably indicators adapted to show color changing signals, preferably areas changing their coloration. In result, a color changing gangway is provided. The interior of the gangway may change colour / lighting levels to give an indication to passengers to move to or from the area, or give a sense of "well being" to give a positive impact on the journey experience. By using different colours, the gangway may indicate the load conditions of the car, particularly the load conditions of neighbouring cars. The gangway may indicate that a passenger should move from one of the neighbouring cars to the other, for example if in the other car free seats/standing places are available. According to load conditions - LED lights (in either the gangway or inter ends) or OLED films or solid state films or other devices may be differently illuminated to change the lighting effect on the gangway.

Even the exterior of a transition section, particularly a gangway, could be used to indicate the load condition of adjacent cars by one or more visible signal indicators, for example indicators as described above, particularly changed/ changing colours. This makes it easier for passengers on track to select cars which are not too crowded right from entering the train.

In one embodiment of the passenger guidance system the detecting means is adapted to detect free seats and/or free standing areas during the stop of the vehicle, when people are entering or leaving.

In another embodiment of the passenger guidance system the detecting means is also adapted to detect free seats and/or free standing areas during the drive of the vehicle, and the control unit is adapted to act on the one or more visible signal indicators in such a way that during the drive of the vehicle the signal is shown that guides passengers to free seats and/or free standing areas. In this embodiment, the guidance system is working dynamically. For example if a passenger leaves a set during the movement of the vehicle because he intends to leave at the next stop, the detecting means detects his now free seat and a signal is shown that directs another passenger to the free seat.

In a further embodiment the passenger guidance system comprises a calculation means adapted to calculate passenger densities in regions of the vehicle, wherein the calculation means is connected with the control unit by a further data transmission means. Preferably the calculation means is adapted to send a signal to the control unit when the passenger density falls below a threshold and the control unit is adapted to act on the one or more visible signal indicators in such a way that a signal is shown when the passenger density falls below the threshold. In order to calculate a passenger density, a predefined region of the vehicle is taken as basis. The predefined region is preferably a sub-region of the total area of a vehicle. The passenger density is preferably defined as the number of free seats and standing places in relation to the total number of seats and standing places in that region. The passenger density can be used as further information in order to indicate regions wherein a minimum number of free seats and/or standing places are available. This is the case when the passenger density falls below the threshold and a signal is shown to guide passengers in the respective region.

In one embodiment the passenger guidance system according to the invention comprises one or more further visible signal indicators that are placed on the outer face of the vehicle, wherein the one or more further visible signal indicators are adapted to guide passengers to free seats and/or free standing areas within the vehicle, and wherein the one or more further visible signal indicators are connected with the control unit. In this embodiment during arrival of the train in station passengers are able to select their preferred car according to free capacity. Preferably, the one or more further visible signal indicators that are placed on the outer face of the vehicle are adapted to show regions within a vehicle wherein free seats or free standing places are available. This system can be combined with a calculation means adapted to calculate passenger densities in regions of the vehicle, as already described above.

Passenger flow can by controlled accordingly. For the further visible signal indicators on the outer side of the vehicle, all the embodiments and variations may be employed that are described above with respect to visible signal indicators that are placed in the interior. In a special embodiment the one or more further visible signal indicators are placed on the outer face of the vehicle in a transition section between two connected parts of the vehicle. As mentioned above, the transition section may be a gangway between two modules of a subway or a streetcar, wherein the two modules are preferably connected by an articulated joint. One or more visible signal indicators may be located on the outer side of a gangway bellow, wherein the same kind of signal indicators may be used as described above.

In another aspect, the invention provides with a railway vehicle, particularly a suburban train, a subway train, or a street car, comprising a passenger guidance system as described above.

In still another aspect, the invention is directed to a process for guidance of passengers within a public transportation vehicle, the process comprising:
- detecting free seats and/or free standing areas within the vehicle by a detecting means
- communicating information about free seats and/or free standing areas to a control unit,
- creating signals in visible signal indicators that are controlled by the control unit and that are located in the interior of the vehicle, wherein the signals guide passengers to free seats and/or free standing areas.

In the process, all passenger guidance systems and components that were described above may be employed.

The process may be carried out during a stop of the vehicle and/or during the ride of the vehicle. In the latter case, the process is a dynamic process that detects seats and/or standing areas that become free during the ride of the vehicle.

In a special embodiment of the process, vehicle load information is sent to the next station as the train leaves from a station. This embodiment allows an indication of passengers in the next station where to wait on the platform. This embodiment may be combined with indication systems that are integrated in a platform of a station. Such systems are known from the prior art, for example prior art cited in the background of this invention.

### BRIEF DESCRIPTION OF THE DRAWINGS

- Fig. 1: shows a part of the interior room of a train with visible signal indicators,
- Fig. 2: shows an arrangement of detecting means, control unit, data transmission means and signal indicator,
- Fig. 3: shows a gangway with visible signal indicators,
- Fig. 4: shows a train with visible signal indicators placed on the outer face of the train.

### DETAILED DESCRIPTION OF THE DRAWINGS

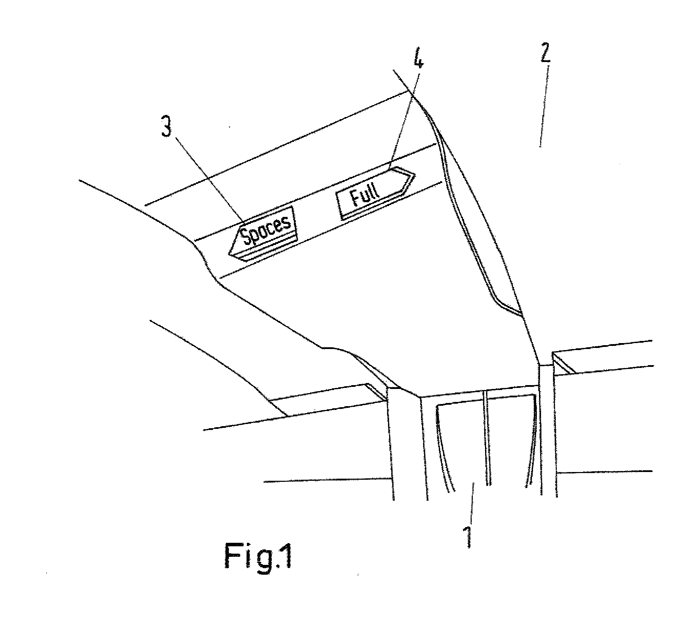

Fig. 1 shows a part of the interior of a subway train with a door and a ceiling 2. Two visible signal indicators 3, 4 are shown in the ceiling in the region of the door 1. The visible signal indicators 3, 4 are in the form of a directional arrow and in the form of areas of different color, in this case organic LED films or areas filled with liquid crystals that may change color. The visible signal indicators 3, 4 are adapted to indicate signals in the form of illuminated areas which may change their coloration and making up illuminated areas so that a variation of the light, luminosity and color may be produced as geometrical figures, in this case a combination of arrows, colored areas within the arrows and letters. The signal indicator 4 on the right side shows the letters "Full" and the area around the letters may be red-colored. Detecting means (not shown) in the right part of the vehicle, in this perspective, have not detected free seats or standing areas, or they have detected only occupied seats/areas. The detecting means has sent a signal to a control unit (not shown). Via a data transmission means (not shown) a control signal was sent to visible signal indicator 4. The control signal effects the visible signal indicator 4 to show a red colored area and the letters "Full". The left signal indicator 3 shows the letters "Spaces" and the area around the letters may be green-colored.

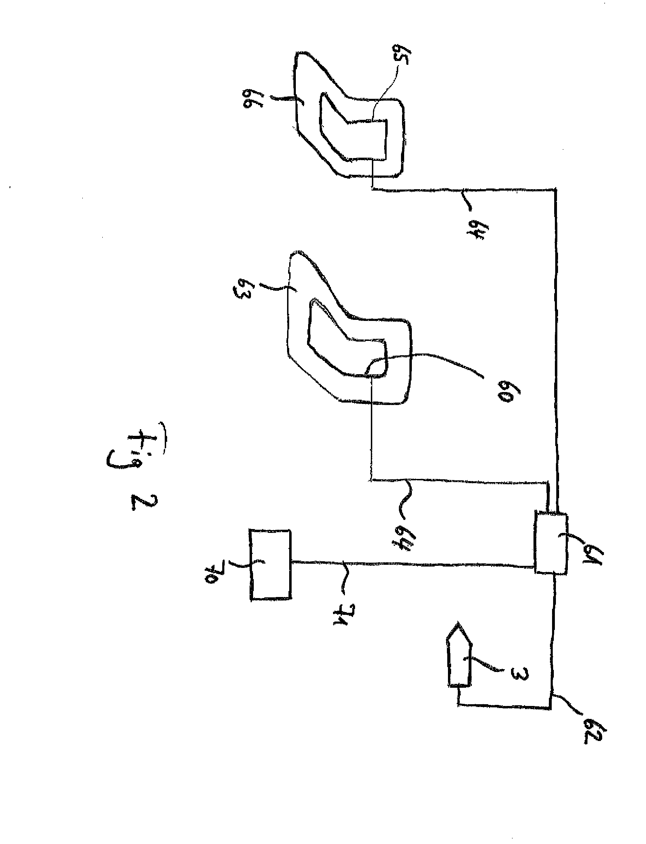

Fig. 2 shows an arrangement of detecting means 60, 65, control unit 61, data transmission means 62 and signal indicator 3 in the left part of the vehicle, seen from the perspective of Fig. 1. A seat 63 is provided with a detecting means 60 which is integrated in the seat 63. In this case, the detecting means 60 may be a capacitive sensor or a pressure sensor that detects presence of a human body. In Fig. 2, the seat 63 is unoccupied and the detecting means 60 detects a free seat 63, or in alternative embodiment a free standing area, or a passenger density that falls below a threshold. In alternative embodiments, the detecting means 60 may be integrated in the floor of the vehicle. The detecting means 60 sends a signal (or no signal, or a negative signal) via a signal transmission means 64 to the control unit 61. Via a data transmission means 62 a control signal is sent to visible signal indicator 3 that may be located in the ceiling, as shown in Fig. 1, or at another appropriate place where it can be seen be passengers. The control signal effects the visible signal indicator 3 to show a green colored area and the letters "Space", as shown in Fig. 1. The signal indicator 3 guides a passenger to the free seat 63, or, in an alternative embodiment, to a free standing area in the left part of the train (in the perspective of Fig. 1).

Fig. 2 shows a second seat 66 with a detecting means 65. The detecting means 65 is also connected with the control unit by a signal transmission means 64. It is to be understood that still more seats within a train, or a selection of seats, may be each provided with a detecting means, and each detecting means may be connected with one or more control units. And the one or more control units may be connected via data transmission means with one or more signal indicators.

Fig. 2 also shows a calculation means 70 adapted to calculate passenger densities in regions of the vehicle, in this case in the region of the vehicle wherein seats 63 and 66 are located. The calculation means 70 is connected with the control unit 61 by a further data transmission means 71. Only seats 63 and 66 are shown as examples and there are still more seats in this region of the train. Each detecting means 60, 65 in each of the seats 63, 66 sends information to the control unit 61 whether it is occupied by a passenger or not. The information for each seat is sent to the calculation means 70 that calculates a passenger density. The passenger density may be calculated as a percentage of occupied seats.

In one embodiment, the control unit 61 acts on the signal indicator 3 in a way that the indicator 3 shows free spaces or seats as long as at least one seat is free. Further signal indicators may be present that lead the passenger to a free seat. Such further signal indicators are also connected with the control unit 61. The control unit 61 has information which one of the seats is free and can therefore control appropriate further signal indicators that lead a passenger to the respective free seat.

In another embodiment the calculation means 70 is adapted to send a signal to the control unit 61 when the passenger density falls below a threshold and the control unit 61 is adapted to act on the visible signal indicator 3 in such a way that a signal is shown when the passenger density falls below the threshold, e.g. green light and the letters "Space".

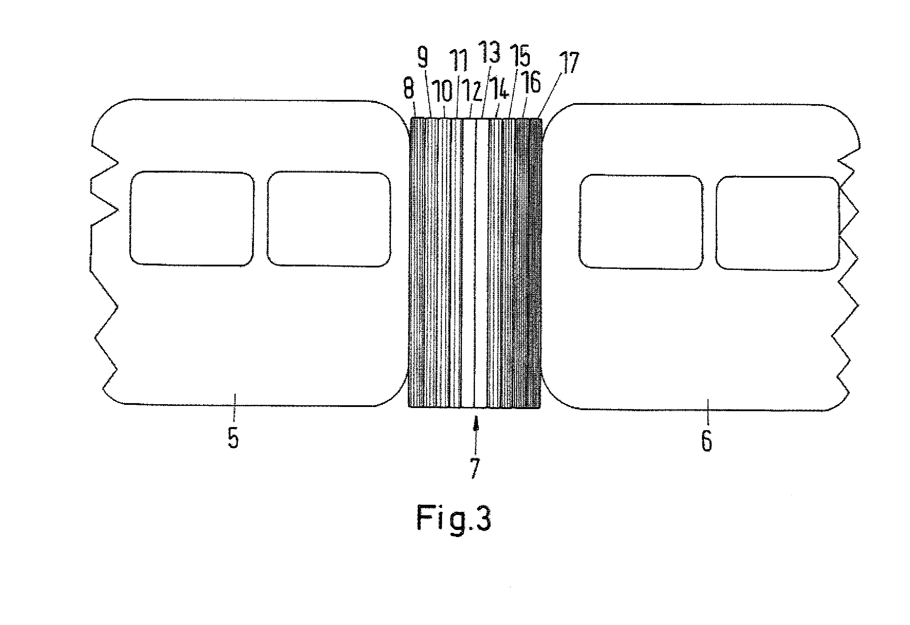

Fig. 3 shows a gangway 7 with visible signal indicators 8-17. The gangway 7 is a gangway bellow that is located between two cars 5 and 6. In this case the left car 5 is empty, or the passenger density is below a predefined threshold, and the right car 6 is crowded, or the passenger density is higher than a predefined threshold. The visible signal indicators 8-17 are located within the gangway bellow as color changing areas. In this case, the visible signal indicators 8-17 are composed of a plurality of LED lights or organic LED films or solid state films or other devices that are differently illuminated to change the lighting effect on the gangway. Fig. 3 shows the interior side of the train. But visible signal indicators 8-17 may also be located on the outer side of the gangway.The color of visible signal indicator 8 may be green to indicate that the car 5 is empty. The color of visible signal indicator 17 may be red to indicate that the car 6 is crowded. The remaining visible signal indicators 9-16 between the outer signal indicators may in summary show a color gradient changing from green to red, as in the green-to-redpart of a rainbow.

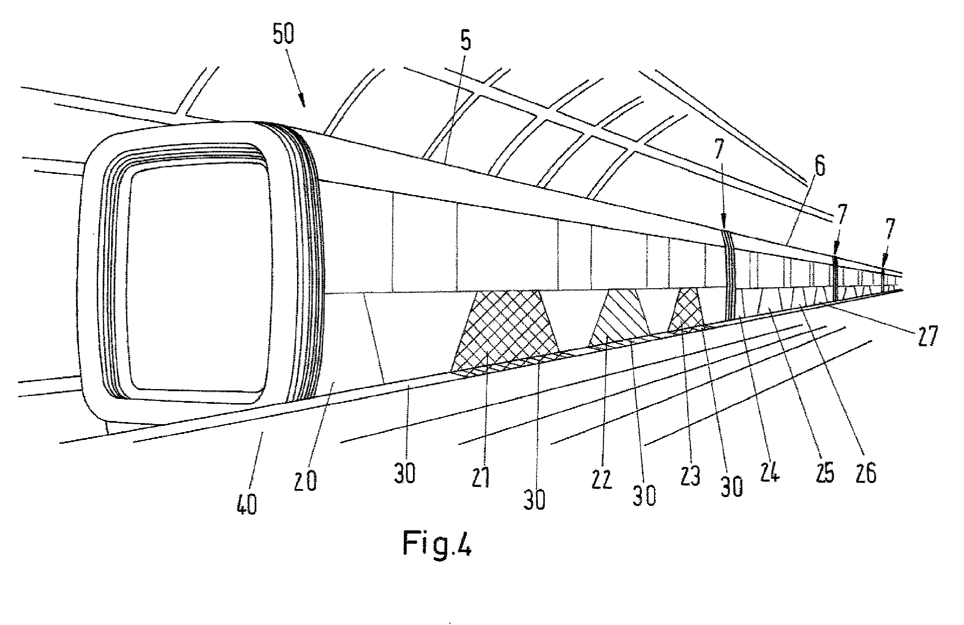

Fig. 4 shows further visible signal indicators 20-27 that are placed on the outer wall of a subway train 50. The signal indicators 20-23 are placed on the outer side of a first car 5, and the signal indicators 24-27 are placed on the outer side of a second car 6. Further signal indicators on further cars (no reference sign), as well a gangways 7 are shown. The visible signal indicators 20-27 are composed of a plurality of LED lights or organic LED films or solid state films or other devices that are differently illuminated to change the lighting effect on the outer side of the train. For example, a red-colored visible signal indicator 21 may indicate that the section of the car where signal indicator 21 is located is crowded. In the same way a green-colored visible signal indicator 22 may indicate that the section of the car where signal indicator 22 is located is empty, or is passenger density falls below a predefined threshold.

An additional indication system 30 for indicating free seats or standing areas in the train is located in the platform 40. Load information of the vehicle is sent to the station before the train arrives. By this measure the indication system 30 helps the passengers on the platform 40 to distribute themselves on the platform in a suitable way in order to reach free non-crowded sections of the train in short time once the train has arrived.

This embodiment allows an indication of passengers in the station where to wait on the platform 40. Indication system 30 may be, for example, an LED light strip that can change color, wherein different colors may be shown in different sections of the light strip. In the present case, the color of the light strip 30 corresponds to the color of the adjacent signal indicator on the outer side of the train. If for example signal indicator 22 is green-colored, the adjacent section of LED light strip 30 is also green. If for example signal indicator 23 is red-colored, the adjacent section of LED light strip 30 is also red.

## Claims

1. Passenger guidance system for guidance of passengers within a public transportation vehicle (50), comprising
- one or more visible signal indicators (3, 4; 8-17), placed in the interior of the vehicle (50) and adapted to guide passengers to free seats and/or free standing areas within the vehicle,
- a detecting means (60, 65) adapted to detect free seats (63, 66) and/or free standing areas,
- a control unit (61) adapted to control the visible signal indicators,
- a data transmission means (62) adapted to transmit data from the control unit (61) to the visible signal indicators (3),
wherein the control unit (61) is adapted to act on the visible signal indicators (3, 4; 8-17) in such a way that a signal is shown that guides passengers to free seats (63, 66) and/or free standing areas.

2. Passenger guidance system according to claim 1, wherein
the detecting means (60, 65) is adapted to detect free seats (63, 66) and/or free standing areas during the drive of the vehicle,
the control unit (61) is adapted to act on the visible signal indicators (3) in such a way that during the drive of the vehicle the signal is shown that guides passengers to free seats (63, 66) and/or free standing areas.

3. Passenger guidance system according to one of the preceding claims, comprising a calculation means (70) adapted to calculate passenger densities in regions of the vehicle, wherein the calculation means (70) is connected with the control unit (61) by a further data transmission means (71).

4. Passenger guidance system according to claim 3, wherein the calculation means (70) is adapted to send a signal to the control unit (61) when the passenger density falls below a threshold and the control unit (61) is adapted to act on the visible signal indicators (3) in such a way that a signal is shown when the passenger density falls below the threshold.

5. Passenger guidance system according to one of the preceding claims, wherein the visible signal indicators are placed in a transition section (7) between two connected parts (5, 6) of the vehicle.

6. Passenger guidance system according to one of the preceding claims, comprising one or more further visible signal indicators (20-27) that are placed on the outer face of the vehicle (50), wherein the further visible signal indicators (20-27) are adapted to guide passengers to free seats and/or free standing areas within the vehicle, and wherein the further visible signal indicators are controlled by the control unit.

7. Passenger guidance system according to claim 6, wherein the one or more further visible signal indicators are placed on the outer face of the vehicle in a transition (7) section between two connected parts of the vehicle.

8. Railway vehicle, particularly suburban train, subway train, or streetcar, comprising a passenger guidance system as mentioned in one of claims 1-7.

9. Process for guidance of passengers within a public transportation vehicle (50), the process comprising:
- detecting free seats (63, 66) and/or free standing areas within the vehicle by a detecting means (60, 65)
- communicating information about free seats and/or free standing areas to a control unit (61),
- creating signals in one or more visible signal indicators (3; 8-17) that are controlled by the control unit (61) and that are located in the interior of the vehicle, wherein the signals guide passengers to free seats (63, 66) and/or free standing areas.

10. Process according to claim 9, wherein the process is carried out during a stop of the vehicle.

11. Process according to claim 9 or 10, wherein the process is carried out dynamically during the ride of the vehicle.
